# EUROPÄISCHE PATENTSCHRIFT

(11) **EP 1 250 979 B1**
(45) Veröffentlichungstag und Bekanntmachung des Hinweises auf die Patenterteilung: **12.10.2005**
(21) Anmeldenummer: 02007446.4
(22) Anmeldetag: 30.03.2002
(51) Int. Cl.: B24B 9/14, B24B 49/12

(54) **Verfahren zur Randbearbeitung von optischen Linsen**
Process for edge-machining of optical lenses
Procédé d'usinage du bord des lentilles optiques

(30) Priorität: 20.04.2001 DE 10119662
(43) Veröffentlichungstag der Anmeldung: 23.10.2002
(73) Patentinhaber: Satisloh GmbH, 35578 Wetzlar (DE)
(72) Erfinder: Gottschald, Lutz, 40670 Meerbusch (DE); Wagner, Jochen, 35614 Asslar (DE)
(74) Vertreter: Oppermann, Mark

(56) Entgegenhaltungen:
- DE-A- 3 827 122
- DE-A- 19 702 287
- DE-A- 19 727 226
- DE-A- 19 804 542

## Beschreibung

Die vorliegende Erfindung bezieht sich auf ein Verfahren zur Randbearbeitung einer optischen Linse gemäß dem Oberbegriff des Patentanspruchs 1, 2 oder 4. Insbesondere bezieht sich die Erfindung auf ein Verfahren zur Randbearbeitung von Brillengläsern, das es gestattet, Brillengläser mit der erforderlichen Genauigkeit in sehr kurzen Bearbeitungszeiten am Rand fertig zu bearbeiten.

Wenn nachfolgend von Brillengläsern die Rede ist, sind darunter optische Linsen bzw. Linsenrohlinge für Brillen aus den gebräuchlichen Materialien, d.h. Mineralglas oder Kunststoff, wie Polycarbonat, CR 39, HI-Index, etc. und mit beliebiger Form des Umfangsrandes der Linse bzw. des Linsenrohlings zu verstehen, die vor der Bearbeitung ihres Randes bereits an einer oder beiden optisch wirksamen Fläche(n) bearbeitet sein können aber nicht müssen.

Ziel der Brillenglasrandbearbeitung ist es, den Rand eines Brillenglases so fertig zu bearbeiten, daß das Brillenglas in ein Brillengestell eingesetzt werden kann. Hierfür ist das Brillenglas zum einen in der Draufsicht gesehen mit einer Umfangskontur zu versehen, die im wesentlichen komplementär zur Umfangskontur der Fassung, d.h. zur Umfangskontur am Brillengestell ist. Zum anderen kann es je nach der Art der Fassung erforderlich sein, am Brillenglasrand eine Nut oder eine Facette auszubilden, die der formschlüssigen Festlegung des Brillenglases am Brillengestell dient. Um sicherzustellen, daß das Brillenglas nach der Randbearbeitung in das Brillengestell paßt, bzw. um die Lage der Nut oder Facette am Brillenglasrand bestimmen zu können, wird der Rand des Brillenglases nach einem spanenden Vorbearbeitungsschritt, der in der Regel unter Zufuhr von Kühlflüssigkeit erfolgt, gemessen und sodann unter Berücksichtigung der gemessenen Randdaten ggf. unter Ausbildung der Nut oder Facette spanend fertigbearbeitet.

So offenbart die gattungsbildende DE-A-38 27 122 ein Verfahren zur Randbearbeitung eines Brillenglases, welches die folgenden Schritte umfaßt: (1) Vorbearbeiten des Randes des um eine Werkstückdrehachse winkelgesteuert drehbaren Brillenglases mittels eines relativ zur Werkstückdrehachse radial zustellbaren ersten Randbearbeitungswerkzeugs, wobei das Brillenglas eine Umfangskontur erhält, die bis auf ein geringfügiges Übermaß der Umfangskontur einer Fassung für das Brillenglas entspricht, (2) berührungsloses Messen des Randes des vorbearbeiteten Brillenglases und (3) Fertigbearbeiten des Randes des Brillenglases unter Berücksichtigung der ermittelten Randdaten des vorbearbeiteten Brillenglases mittels eines relativ zur Werkstückdrehachse radial zustellbaren zweiten Randbearbeitungswerkzeugs, wobei das Brillenglas eine zur Umfangskontur der Fassung im wesentlichen komplementäre Umfangskontur erhält.

Obgleich dieses Randbearbeitungsverfahren im Vergleich zu anderen vorbekannten Verfahren (z.B. EP-A-0 160 985),bei denen die Randdaten des vorbearbeiteten Brillenglases mechanisch abgetastet werden, um Informationen für die Fertigbearbeitung des Brillenglasrandes zu erhalten, schon Vorteile dahingehend besitzt, daß aufgrund der berührungslos arbeitenden Meßanordnung eine Beschädigung und/oder die Meßergebnisse verfälschende Bewegungen bzw. Verformungen des Brillenglases / der Meßanordnung beim Messen jedenfalls vermieden werden, ist ein Nachteil des gattungsbildenden Stands der Technik insbesondere darin zu sehen, daß die Randdaten des vorbearbeiteten Brillenglases mit den in der DE-A-38 27 122 beschriebenen Meßprinzipien nicht immer zuverlässig bzw. nicht innerhalb akzeptabler Zeiten ermittelt werden konnten. Meßanordnungen, die zum berührungslosen Abtasten des Randes eines formbearbeiteten Brillenglases ein Video-Aufnahme-System oder ein Laser-Scanner-System verwenden, sind im übrigen aus der DE-A-198 04 542 bzw. der DE-A-197 02 287 bekannt.

Eine Meßanordnung und ein Verfahren zum berührungslosen Erfassen der 3-dimensionalen Raumform einer Brillenfassungsnut mittels Triangulation sind schließlich aus der DE-A-197 27 226 bekannt.

Dem obigen Stand der Technik gegenüber liegt der Erfindung die Aufgabe zugrunde, ein insbesondere hinsichtlich der Bearbeitungsgeschwindigkeit und -genauigkeit verbessertes Verfahren zur Randbearbeitung von optischen Linsen anzugeben.

Diese Aufgabe wird durch die im Patentanspruch 1, 2 oder 4 angegebenen Merkmale gelöst. Vorteilhafte bzw. zweckmäßige Weiterbildungen der Erfindung sind Gegenstand der Patentansprüche 3 und 5 bis 11.

Den Verfahren gemäß den Patentansprüchen 1, 2 und 4 ist neben den im jeweiligen Oberbegriff enthaltenen Merkmalen gemein,
daß beim Vorbearbeiten des Randes der Linse am Rand eine im trockenen Zustand definiert matte Oberfläche mit einer gemittelten Rauhtiefe Rz von 4,5 bis 11 µm erzeugt wird,
daß, wenn das Vorbearbeiten des Randes der Linse unter Zufuhr von Kühlflüssigkeit erfolgt, wenigstens der Rand der vorbearbeiteten Linse getrocknet wird bevor der Rand gemessen wird, und
daß zum Messen des Randes ein Bündel von Laserstrahlen mittels eines in einer vorgegebenen Lagebeziehung zur Werkstückdrehachse stehenden Lasers auf die trockene, definiert matte Oberfläche des Randes gerichtet und ein Bild der Auftreffstelle der Laserstrahlen mittels einer in einer vorgegebenen Lagebeziehung zur Werkstückdrehachse stehenden Videokamera aufgenommen wird, wobei das aufgenommene Bild sodann hinsichtlich des Abstands der Auftreffstelle von der Werkstückdrehachse und ggf. von Höhenwerten der Auftreffstelle ausgewertet wird, um die Randdaten der vorbearbeiteten Linse zu ermitteln.

Hinsichtlich der Trocknung des Randes der vorbearbeiteten Linse unterscheiden sich die Verfahren gemäß den Patentansprüchen 1, 2 und 4 jedoch. Während entsprechend dem Patentanspruch 1 zum Trocknen des Randes der vorbearbeiteten Linse die Zufuhr von Kühlflüssigkeit abgestellt und sodann das Randbearbeitungswerkzeug so in radialer Richtung relativ zur Werkstückdrehachse zugestellt wird, daß es mit einer sehr geringen, im,wesentlichen konstanten Eindringtiefe mit dem Rand der Linse in Bearbeitungseingriff tritt, während die Linse gedreht wird, wird gemäß dem Patentanspruch 2 zum Trocknen des Randes der vorbearbeiteten Linse die Zufuhr von Kühlflüssigkeit abgestellt und sodann das mit einer hohen Drehzahl angetriebene Randbearbeitungswerkzeug so in radialer Richtung relativ zur Werkstückdrehachse zugestellt, daß zwischen dem Randbearbeitungswerkzeug und dem Rand der Linse ein Spalt mit einer kleinen Spaltbreite verbleibt, während die Linse gedreht wird. In Ergänzung (Patentanspruch 3) oder als Alternative dazu (Patentanspruch 4) ist schließlich vorgesehen, daß zum Trocknen des Randes der vorbearbeiteten Linse die Zufuhr von Kühlflüssigkeit abgestellt und sodann der Rand der Linse mittels mindestens einer Düse mit Luft angeblasen wird, während die Linse gedreht wird.

Die Erfindung setzt u.a. an der Überlegung an, daß es zur Beschleunigung der Randbearbeitung von Linsen insbesondere wünschenswert wäre, die Nebenzeiten, d.h. die Zeiten, während der kein formgebender Bearbeitungseingriff zwischen dem jeweiligen Randbearbeitungswerkzeug und dem Linsenrand vorliegt, zu reduzieren. Hier hat sich gezeigt, daß infolge der erfindungsgemäßen Vorgehensweise, die im Kern auf das Messen der trockenen bzw. getrockneten, definiert matten Oberfläche des Randes der vorbearbeiteten Linse mittels einer aus Laser und Videokamera bestehenden, auf besondere Weise berührungslos arbeitenden Meßanordnung abstellt, die Randdaten der vorbearbeiteten Linse mit erhöhter Genauigkeit deutlich schneller als bisher möglich ermittelt werden können, so daß die hierfür benötigten Nebenzeiten gegenüber dem Stand der Technik erheblich verringert werden können.

Im folgenden wird die Erfindung anhand eines bevorzugten Ausführungsbeispiels unter Bezugnahme auf die beigefügte schematische Zeichnung näher erläutert. Darin zeigen:

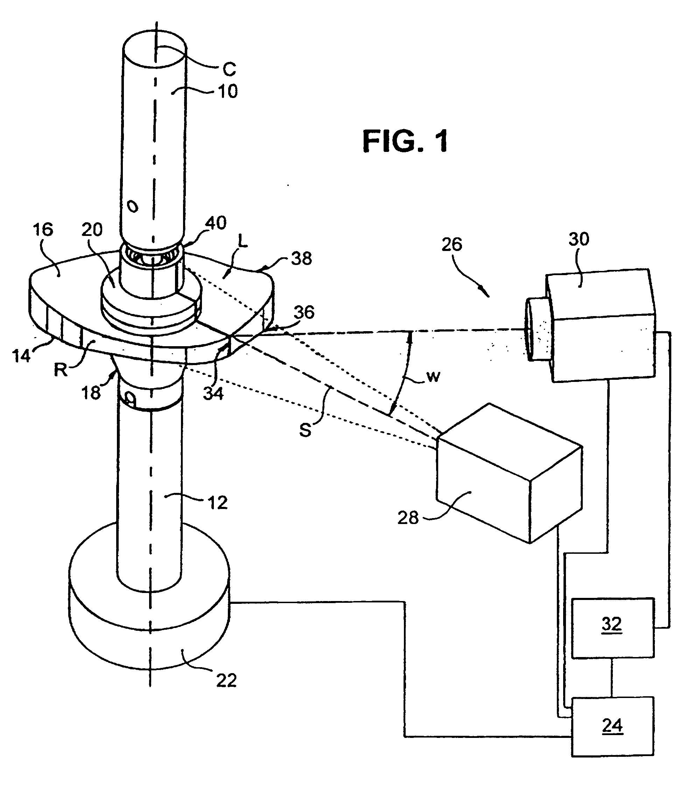

- Fig. 1: eine perspektivische Ansicht eines zwischen zwei Haltewellen eingespannten, am Rand vorbearbeiteten Brillenglases sowie einer einen Laser und eine Videokamera umfassenden, berührungslos arbeitenden Meßanordnung zum Ermitteln der Randdaten des vorbearbeiteten Brillenglases während des erfindungsgemäßen Randbearbeitungsverfahrens,

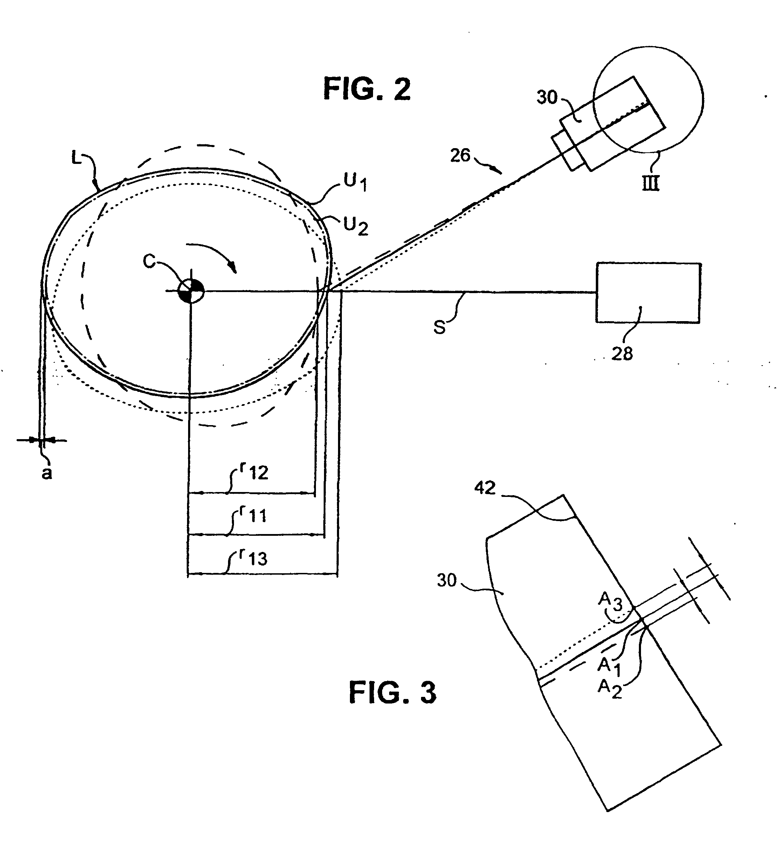

- Fig. 2: eine Draufsicht auf die Meßanordnung gemäß Fig. 1, die u.a. veranschaulicht, wie Radiuswerte des vorbearbeiteten Brillenglases erfaßt werden, wobei zur Vereinfachung der Darstellung gegenüber Fig. 1 lediglich das vorbearbeitete Brillenglas, der Laser und die Videokamera dargestellt sind,
- Fig. 3: eine vergrößerte Darstellung des Details III in Fig. 2 und

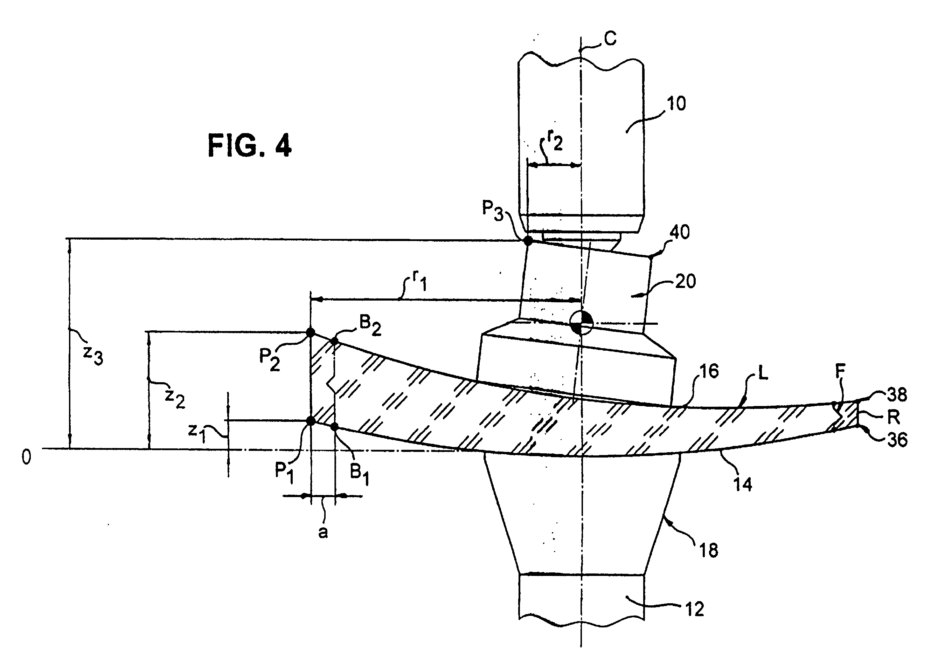

- Fig. 4: eine teilweise geschnittene Seitenansicht des zwischen den zwei Haltewellen gemäß Fig. 1 eingespannten, vorbearbeiteten Brillenglases, die u.a. veranschaulicht, wie Höhenwerte des vorbearbeiteten Brillenglases erfaßt werden, wobei das vorbearbeitete Brillenglas in einer durch die Werkstückdrehachse verlaufenden Ebene geschnitten dargestellt ist.

Die Fig. 1 zeigt eine optische Linse L in Form eines Brillenglases, das für eine Bearbeitung seines Randes R zwischen zwei lediglich schematisch dargestellten, axial fluchtenden Haltewellen 10, 12 eingespannt ist, die synchron um eine CNC-gesteuerte, vertikale Werkstückdrehachse C drehbar und in axialer Richtung relativ zueinander verstellbar sind, um die Linse L einzuspannen. Die Haltewellen 10, 12 sind Bestandteil einer nicht näher gezeigten Werkstückantriebs- und Spannvorrichtung, die prinzipiell wie in der älteren deutschen Patentanmeldung 100 08 710.8 der Anmelderin beschrieben ausgebildet sein kann.

Zwischen den einander zugewandten Enden der Haltewellen 10, 12 ist die Linse L mittels einer in der älteren deutschen Patentanmeldung 101 14 238.2 der Anmelderin detailliert beschriebenen Anordnung zum Blocken und Spannen der Linse L gehalten, die ein lösbar an einer unteren optisch wirksamen Fläche 14 der Linse L anbringbares Blockstück, einen mit der unteren Haltewelle 12 starr verbindbaren Adapter für das Blockstück, welcher zur drehwinkelorientierten Drehmitnahme des Blockstücks ausgebildet ist, und eine Spannbaugruppe umfaßt, die einen mit der oberen Haltewelle 10 starr verbindbaren Befestigungsabschnitt und einen damit winkelbeweglich verbundenen Spannabschnitt aufweist, der zum kraftschlüssigen Angriff an einer oberen optisch wirksamen Fläche 16 der Linse L ausgebildet ist. Für die Zwecke der vorliegenden Anmeldung wird nachfolgend auf das Blockstück sowie den Blockstückadapter allgemein mit dem Begriff Blockstück 18 Bezug genommen werden, während auf die Spannbaugruppe im folgenden allgemein mit dem Begriff Niederhalter 20 Bezug genommen wird.

Die Drehwinkelstellung der winkelgesteuert drehbaren Haltewellen 10, 12 und damit der dazwischen eingespannten Linse L ist schließlich mittels eines in Fig. 1 schematisch dargestellten Winkelmeßwertgebers 22 für den Drehwinkel ϕ erfaßbar, der ausgangsseitig mit einer Steuereinheit 24 elektrisch verbunden ist.

Die Werkstückantriebs- und Spannvorrichtung gehört zu einer nicht weiter dargestellten Linsenrandbearbeitungsmaschine, in deren Arbeitsraum die Haltewellen 10, 12 hineinragen. Die Linsenrandbearbeitungsmaschine weist des weiteren eine hier ebenfalls nicht gezeigte Randbearbeitungsvorrichtung auf, die grundsätzlich wie in der älteren deutschen Patentanmeldung 101 14 239.0 der Anmelderin beschrieben ausgebildet sein kann.

Die Randbearbeitungsvorrichtung hat ein im Arbeitsraum befindliches erstes Randbearbeitungswerkzeug, welches wenigstens radial relativ zur Werkstückdrehachse C CNC-gesteuert (X-Achse) zustellbar ist und dazu dient, den Rand R der Linse L derart vorzubearbeiten, daß die Linse L eine Umfangskontur U₁ erhält, die bis auf ein geringfügiges Übermaß a der Umfangskontur einer Fassung für die Linse L entspricht (siehe Fig. 2). Ferner weist die Randbearbeitungsvorrichtung ein im Arbeitsraum befindliches zweites Randbearbeitungswerkzeug auf, das ebenfalls wenigstens radial relativ zur Werkstückdrehachse C CNC-gesteuert zustellbar ist und dazu dient, den Rand R der Linse L so fertigzubearbeiten, daß die Linse L eine zur Umfangskontur der Fassung im wesentlichen komplementäre Umfangskontur U₂ erhält. Bei der Fertigbearbeitung des Linsenrandes R kann ggf. eine Nut oder Facette F ausgebildet werden, wozu das zweite Randbearbeitungswerkzeug auch in einer Richtung parallel zur Werkstückdrehachse C CNC-gesteuert (Z-Achse) verstellbar ist.

Die hier möglichen Randbearbeitungswerkzeuge, bei denen es sich vorzugsweise um drehend angetriebene Werkzeuge, wie Fräser oder Schleifscheiben handelt, deren Rotationsachsen parallel zur Werkstückdrehachse C verlaufen, sind dem Fachmann hinlänglich bekannt und sollen deshalb an dieser Stelle nicht näher beschrieben werden. Erwähnt sei in diesem Zusammenhang lediglich, daß die Werkzeuge auch in einem mittels der Randbearbeitungsvorrichtung axial verstellbaren Kombinationswerkzeug mit verschiedenen, koaxial angeordneten Bearbeitungsabschnitten, etwa Fräs-, Schleif- und/oder Polierabschnitten, zusammengefaßt sein können. Ebenfalls ist der Einsatz eines Drehmeißels als Randbearbeitungswerkzeug denkbar.

Zum weiteren Aufbau der Linsenrandbearbeitungsmaschine ist an dieser Stelle noch anzumerken, daß im Arbeitsraum auch Düsen für die Zufuhr von Kühlflüssigkeit und/oder Druckluft vorgesehen sein können. Bei der Randbearbeitung von Linsen L ist es grundsätzlich erforderlich, Kühlflüssigkeit in den Bereich zwischen der Linse L und dem Randbearbeitungswerkzeug zuzuführen, um Werkzeug und Werkstück zu kühlen sowie Späne bzw. den Bearbeitungsabrieb abzuführen. Lediglich bei der Randbearbeitung von Linsen aus Kunststoff kann die Zufuhr von Kühlflüssigkeit ausnahmsweise entbehrlich sein. Eine oder mehrere Düsen für die Zufuhr von Druckluft können vorgesehen sein, um u.a. zumindest den Rand R der Linse L nach deren Vorbearbeitung zu trocknen, wie nachfolgend noch näher beschrieben werden wird.

Damit der Rand R der Linse L in der Aufspannung, in welcher auch die spanende Bearbeitung des Randes R der Linse L erfolgt, gemessen werden kann, ist die Linsenrandbearbeitungsmaschine schließlich mit einer berührungslos arbeitenden Meßanordnung 26 ausgerüstet.

Die Meßanordnung 26 umfaßt einen Laser 28 und eine Videokamera 30, die beide in einer vorgegebenen Lagebeziehung zur Werkstückdrehachse C und damit auch in einer vorgegebenen Lagebeziehung zueinander stehen. Der Laser 28 und die Videokamera 30, die mit der eingespannten Linse L in etwa in einer Ebene liegen, sind eingangsseitig elektrisch mit der Steuereinheit 24 verbunden, so daß die Steuereinheit 24 den Laser 28 bzw. die Videokamera 30 wahlweise ein- und ausschalten kann. Die Videokamera 30 ist des weiteren ausgangsseitig an eine Signalaufbereitungseinrichtung 32 angeschlossen, die ihrerseits elektrisch mit der Steuereinheit 24 verbunden ist und dazu dient, das von der Videokamera 30 erhaltene Bildsignal in an sich bekannter Weise aufzubereiten, damit es von der Steuereinheit 24 ausgewertet werden kann.

Damit die Meßanordnung 26 nicht verschmutzen kann, sind der Laser 28 und die Videokamera 30 vorzugsweise außerhalb des Arbeitsraums der Linsenrandbearbeitungsmaschine hinter durchsichtigen Scheiben (nicht gezeigt) angeordnet, die wahlweise mit Verschlußklappen (nicht dargestellt) abgedeckt werden können, so daß auch die Scheiben bei der spanenden Bearbeitung des Randes R der Linse L nicht verdrecken können.

Bei dem Laser 28 handelt es sich im hier beschriebenen Ausführungsbeispiel um eine Laser-Einrichtung der Klasse 2 gemäß DIN EN 60825-1, die eine Leistung von ca. 1 mW bei einer Wellenlänge zwischen 650 und 700 nm aufweist. Wie die Fig. 1 und 2 zeigen, ist der Laser 28 derart ausgebildet und bezüglich der Werkstückdrehachse C ausgerichtet, daß ein auf die Merkstückdrehachse C gerichtetes, in Fig. 1 punktiert angedeutetes. Bündel von Laserstrahlen S abgegeben werden kann, welches sich beim Auftreffen auf den im Querschnitt gesehen zur Werkstückdrehachse C parallelen Rand R der Linse L und den Niederhalter 20 als vertikal verlaufender Strich darstellt. Mit anderen Worten gesagt liegen die mittels des Lasers 28 abgegebenen Laserstrahlen S in einer gedachten Ebene, die die Werkstückdrehachse C enthält.

Die Videokamera 30 ist so ausgerichtet, daß sie die in Fig. 1 allgemein mit 34 bezifferte Auftreffstelle des im dargestellten Ausführungsbeispiel auffächernden Bündels von Laserstrahlen S auf dem Rand R der Linse L bzw. dem Niederhalter 20 aufnehmen kann. Hierzu ist die Videokamera 30 von der Werkstückdrehachse C definiert beabstandet, während die optische Achse der Videokamera 30 mit der Ebene der Laserstrahlen S einen Winkel w einschließt, der vorzugsweise zwischen 30° und 60°, mehr bevorzugt zwischen 40° und 50° liegt.

In Fig. 1 ist mit 36 schließlich eine Unterkante des Linsenrandes R, mit 38 eine Oberkante des Linsenrandes R und mit 40 eine sichtbare Oberkante des Niederhalters 20 beziffert. Auf diese umlaufenden Kanten 36, 38 und 40 sowie deren Bedeutung für das hier beschriebene Verfahren wird nachfolgend unter Bezugnahme auf die Fig. 4 noch näher eingegangen werden.

Die Meßanordnung 26 arbeitet nach einem Meßprinzip, welches auch unter dem Stichwort Lasertriangulation bekannt ist und nachfolgend anhand der Fig. 2 erläutert werden soll, soweit dies für das Verständnis des unten noch näher beschriebenen Randbearbeitungsverfahrens erforderlich erscheint. Wie bereits erwähnt wird hierbei die Auftreffstelle 34 der vom Laser 28 abgegebenen Laserstrahlen S mittels der Videokamera 30 beobachtet, wobei ein Bild der Auftreffstelle 34 durch eine Optik der Videokamera 30 auf einer Abbildungsebene 42 der Videokamera 30 fokussiert wird. Jeder Punkt des auf der Abbildungsebene 42 der Videokamera 30 abgebildeten Bildes der Auftreffstelle 34 hat einen Höhen- und einen Breitenkoordinatenwert, wobei in der Steuereinheit 24 jedem Höhenkoordinatenwert der Abbildungsebene 42 ein bestimmter Höhenwert z des entsprechenden Punktes der Auftreffstelle 34 und jedem Breitenkoordinatenwert der Abbildungsebene 42 ein bestimmter Abstandswert r des entsprechenden Punktes der Auftreffstelle 34 von der Werkstückdrehachse C zugeordnet ist. Die Zuordnung der Höhen- und Breitenkoordinatenwerte des Bildes der Auftreffstelle 34 zu den tatsächlichen Höhen- bzw. Abstandswerten z, r der Auftreffstelle 34 wird durch eine Kalibrierung der Meßanordnung 26 mittels eines Gitterrasters vorgegeben.

Die Fig. 2 und 3 veranschaulichen dieses Meßprinzip anhand der Abstands- oder Radiuswerte r des Linsenrandes R von der Werkstückdrehachse C. Die Linse L hat hier eine von der Kreisform abweichende Umfangskontur U₁, so daß sich der Abstand r des Linsenrandes R von der Werkstückdrehachse C von Winkelstellung zu Winkelstellung der Linse L ändert (r₁₁, r₁₂, r₁₃). In der durchgezogen dargestellten Winkelstellung der Linse L treffen die Laserstrahlen S auf einer Stelle des Linsenrandes R auf, die als Strichbild A₁ auf der Abbildungsebene 42 der Videokamera 30 aufgenommen wird. Das Strichbild A₁ hat einen Breitenkoordinatenwert, dem in der Steuereinheit 24 der Abstandswert r₁₁ zugeordnet ist. Wird nun die Linse L um die Werkstückdrehachse C im Uhrzeigersinn in die gestrichelt dargestellte Winkelstellung gedreht, treffen die Laserstrahlen S auf einer anderen Stelle des Linsenrandes R auf, die auf der Abbildungsebene 42 der Videokamera 30 als Strichbild A₂ aufgenommen wird. Wie die Fig. 3 zeigt, ist das Strichbild A₂ bezogen auf das Strichbild A₁ um einen bestimmten Betrag nach unten gewandert, so daß das Strichbild A₂ einen anderen Breitenkoordinatenwert als das Strichbild A₁ hat, dem in der Steuereinheit 24 der Abstandswert r₁₂ zugeordnet ist, welcher entsprechend den realen Verhältnissen vom Abstandswert r₁₁ verschieden ist. Bei einem weiteren Drehen der Linse L in die punktiert dargestellte Winkelstellung treffen die Laserstrahlen S wiederum auf einer anderen Stelle des Linsenrandes R auf, die sich auf der Abbildungsebene 42 der Videokamera 30 als Strichbild A₃ darstellt. Das Strichbild A₃ ist bezogen auf das Strichbild A₁ in Fig. 3 um einen bestimmten Betrag nach oben gewandert und hat demgemäß ebenfalls einen anderen Breitenkoordinatenwert als das Strichbild A₁, dem in der Steuereinheit 24 der Abstandswert r₁₃ zugeordnet ist. Es ist ersichtlich, daß somit für jede Winkelstellung der Linse L der Abstand r(ϕ) zwischen der Auftreffstelle 34 der Laserstrahlen S z.B. auf dem Linsenrand R und der Werkstückdrehachse C bestimmt werden kann.

Das Ermitteln von Höhenwerten z(ϕ) der Auftreffstelle der Laserstrahlen S erfolgt in analoger Weise in einer gegenüber der Darstellungsebene gemäß Fig. 3 um 90° gedrehten Ebene, wobei z.B. das auf der Abbildungsebene 42 der Videokamera 30 aufgenommene Strichbild der Auftreffstelle der Laserstrahlen S auf dem Linsenrand R entsprechend der sich über den Umfang der Linse L ändernden Dicke des Linsenrandes R länger oder kürzer wird. Auch hier hat jeder Punkt des Strichbilds auf der Abbildungsebene 42 der Videokamera 30 einen Höhenkoordinatenwert, dem in der Steuereinheit 24 entsprechend den realen Verhältnissen ein bestimmter Höhenwert z der Auftreffstelle 34 der Laserstrahlen S zugeordnet ist.

Der Ablauf des Randbearbeitungsverfahrens kann grob in drei bzw. vier Schritte unterteilt werden, nämlich Vorbearbeiten des Linsenrandes R, ggf. Trocknen des vorbearbeiteten Linsenrandes R, berührungsloses Messen des vorbearbeiteten Linsenrandes R und sodann Fertigbearbeiten des Linsenrandes R unter Berücksichtigung der ermittelten Randdaten der vorbearbeiteten Linse L.

Zunächst wird der Rand R der Linse L mittels des ersten Randbearbeitungswerkzeugs entsprechend in der Steuereinheit 24 abgelegter bzw. berechneter Daten vorbearbeitet, wobei die Linse L die in Fig. 2 gezeigte Umfangskontur U₁ erhält, die bis auf das kleine Übermaß a der Umfangskontur der Fassung für die Linse L entspricht. Wesentlich ist hier, daß beim Vorbearbeiten des Randes R der Linse L am Rand R eine im trockenen Zustand definiert matte Oberfläche erzeugt wird, was sich als für die Genauigkeit und Geschwindigkeit des Meßschrittes wichtig herausgestellt hat. Untersuchungen der Anmelderin haben ergeben, daß eine solche definiert matte Oberfläche des Linsenrandes R eine gemittelte Rauhtiefe Rz nach DIN 4768 von ca. 4,5 bis 11 µm aufweist und insbesondere mittels eines Fräsers oder einer Schleifscheibe erzeugt werden kann. Es hat sich gezeigt, daß die definierte Mattigkeit der Oberfläche des Linsenrandes R gewährleistet, daß beim Messen mittels der oben beschriebenen Meßanordnung 26 ein ausreichender Anteil der Laserstrahlen S von der Auftreffstelle 34 in die Videokamera 30 reflektiert wird, während die Laserstrahlen S nicht zu weit in den Linsenrand R eindringen, was das auf der Abbildungsebene 42 der Videokamera 30 aufgenommene Bild der Auftreffstelle 34 "verschmieren" würde. Mit anderen Worten gesagt hat die Oberfläche des Linsenrandes R somit in etwa die Reflexionseigenschaften einer guten Projektionswand für Dia- bzw. Filmprojektionen.

Erfolgte das Vorbearbeiten des Linsenrandes R - wie eigentlich üblich - unter der Zufuhr von Kühlflüssigkeit, wird im nächsten Verfahrensschritt nach Abstellen der Zufuhr von Kühlflüssigkeit wenigstens der Rand R der vorbearbeiteten Linse L getrocknet bevor der Rand R gemessen wird, damit etwa auf dem Linsenrand **R** zurückgebliebene Kühlflüssigkeitsrückstände nicht zu einem Glänzen der Oberfläche führen können, welches der Meßgenauigkeit und -geschwindigkeit abträglich wäre.

Der Linsenrand R wird mittels des Randbearbeitungswerkzeugs und/oder unter der Zufuhr von Druckluft getrocknet. Was das Trocknen mittels des Randbearbeitungswerkzeugs angeht, sind je nach dem Werkstoff der Linse L zwei alternative Vorgehensweisen vorgesehen. Bei Linsenwerkstoffen, die trocken bearbeitet werden können (Kunststoff), wird das Randbearbeitungswerkzeug derart in radialer Richtung relativ zur Werkstückdrehachse C zugestellt, daß es mit einer sehr geringen, im wesentlichen konstanten Eindringtiefe mit dem Rand R der Linse L in Bearbeitungseingriff tritt, während die Linse L wie bei der eigentlichen Randbearbeitung oder schneller gedreht wird. Infolge des trockenen spanenden Eingriffs kommt es zu einer Erwärmung im Eingriffsbereich zwischen Randbearbeitungswerkzeug und Linse L, die den Rand R der Linse L trocknet. Bei Linsenwerkstoffen, die nicht trocken bearbeitet werden können (Mineralglas), wird das Randbearbeitungswerkzeug mit einer hohen Drehzahl angetrieben und derart in radialer Richtung relativ zur Werkstückdrehachse C zugestellt, daß zwischen dem Randbearbeitungswerkzeug und dem Rand der Linse L ein Spalt mit einer kleinen Spaltbreite verbleibt, während die Linse L wie bei der eigentlichen Randbearbeitung oder schneller gedreht wird. Hier wirkt das Randbearbeitungswerkzeug quasi als Ventilator, der den Linsenrand R zum Trocknen anbläst. Alternativ oder in Ergänzung zu den beschriebenen Vorgehensweisen zur Trocknung des Linsenrandes R unter Zuhilfenahme des Randbearbeitungswerkzeugs kann der Rand R der Linse L auch mittels einer oder einer Mehrzahl von Düsen mit Druckluft angeblasen werden, während die Linse L wie bei der eigentlichen Randbearbeitung oder schneller gedreht wird.

Zum berührungslosen Messen des Randes R der vorbearbeiteten Linse L werden zunächst die Verschlußklappen an dem Laser 28 und der Videokamera 30 geöffnet, so daß mittels des Lasers 28 ein Bündel von Laserstrahlen S auf die trockene, definiert matte Oberfläche des Linsenrandes R gerichtet werden kann. Erwähnt sei in diesem Zusammenhang, daß der Laser 28 während des Betriebs der Linsenrandbearbeitungsmaschine stets eingeschaltet ist, damit aufgrund der Aufwärmphase des Lasers 28 beim Messen nicht unnötig Zeit verloren geht. Mittels der Videokamera 30 wird wie oben beschrieben ein Bild der Auftreffstelle 34 der Laserstrahlen S aufgenommen.

Nun wird die am Rand R vorbearbeitete Linse L winkelschrittweise von einer Meßposition zur nächsten Meßposition gedreht, bis die Linse L eine vollständige Umdrehung ausgeführt hat. Hierbei wird die Linse L vorzugsweise mit gleichen Winkelschritten von Meßposition zu Meßposition weiterbewegt, wobei die Anzahl der Winkelschritte gerade ist.

Das in jeder Meßposition durch die Videokamera 30 aufgenommene Bild wird dabei hinsichtlich des Abstands r (ϕ) der Auftreffstelle 34 der Laserstrahlen S von der Werkstückdrehachse C und ggf. von Höhenwerten z(ϕ) der Auftreffstelle 34 ausgewertet, um die Randdaten der vorbearbeiteten Linse L zu ermitteln. Soll die Linse L bei der Fertigbearbeitung keine Facette F oder Nut am Rand R erhalten, ist eine Auswertung der von der Videokamera 30 aufgenommenen Bilder hinsichtlich von Höhenwerten z (ϕ) der Auftreffstelle 34 entbehrlich. Zur Fertigbearbeitung des Linsenrandes R reicht es aus, die Abstandswerte r₁ (ϕ) des Randes R der vorbearbeiteten Linse L von der Werkstückdrehachse C zu kennen, aus denen sich auch der Umfang der Linse L am Rand R berechnen läßt.

Soll bei der Fertigbearbeitung der Linse L am Rand R eine Facette F oder Nut ausgebildet werden, deren Verlauf auf dem Rand R vor der Fertigbearbeitung in an sich bekannter Weise zu berechnen ist, ist es erforderlich, neben den Radiuswerten r₁ (ϕ) auch den Höhenverlauf z₁(ϕ) der Linsenunterkante 36, den Höhenverlauf z₂(ϕ) der Linsenoberkante 38 sowie die Krümmungen K₁(ϕ), K₂ (ϕ) beider optisch wirksamen Flächen 14, 16 der Linse L wenigstens näherungsweise zu kennen. Zu diesem Zweck werden in jeder Meßposition der zwischen dem Blockstück 18 und dem Niederhalter 20 eingespannten Linse L mittels des Winkelmeßwertgebers 22 der ϕ der Linse L und mittels der Meßanordnung 26 die Höhen z₁(ϕ) und z₂(ϕ) der Unterkante 36 bzw. der Oberkante 38 des Randes R der Linse L bezogen auf eine Anlagestelle der Linse L am Blockstück 18, der Abstand r₁ (ϕ) des Randes R der Linse L von der Werkstückdrehachse C, die Höhe z₃ (ϕ) der Oberkante 40 des Niederhalters 20 bezogen auf die Anlagestelle der Linse L am Blockstück 18 sowie der Abstand r₂(ϕ) der Oberkante 40 des Niederhalters 20 von der Werkstückdrehachse C ermittelt. Mit anderen Worten gesagt wird das von der Videokamera 30 aufgenommene Bild der Auftreffstelle 34 der Laserstrahlen S in jeder Meßposition der Linse L im Schnitt gemäß Fig. 4 betrachtet hinsichtlich der Höhen- und Radiuswerte z₁(ϕ), z₂(ϕ), z₃(ϕ), r₁(ϕ) und r₂(ϕ) von Meßpunkten P₁, P₂ und P₃ auf der Linsenunterkante 36, der Linsenoberkante 38 bzw. Oberkante 40 des Niederhalter 20 ausgewertet.

Während sich aus den so gewonnenen Werten der Abstandsverlauf r₁ (ϕ) des Linsenrandes R von der Werkstückdrehachse C sowie die Höhenverläufe z₁(ϕ) und z₂(ϕ) der Linsenunterkante 36 bzw. der Linsenoberkante 38 unmittelbar ergeben, sind die Krümmungen K₁ (ϕ), K₂ (ϕ) der optisch wirksamen Flächen 14, 16 der Linse L noch zu berechnen. Hierbei kann die Krümmung K₁ (ϕ) der unteren optisch wirksamen Fläche 14 der Linse L aus der bekannten Anlagestelle der Linse L am Blockstück 18 sowie der Lage der Meßpunkte P₁ auf der Linsenunterkante 36 an diametral gegenüberliegenden Meßpositionen ermittelt werden. Zur Berechnung der Krümmung K₂ (ϕ) der oberen optisch wirksamen Fläche 16 der Linse L wird neben der Lage der Meßpunkte P₂ auf der Linsenoberkante 38 an diametral gegenüberliegenden Meßpositionen noch die Lage der Meßpunkte P₃ auf der Oberkante 40 des Niederhalters 20 an denselben Meßpositionen herangezogen, wobei die Lage der Meßpunkte P₃ Auskunft über die Winkelstellung des Niederhalter 20 und somit über dessen Anlagestellen an der oberen optisch wirksamen Fläche 16 gibt.

Nunmehr kann der Verlauf der Facette F oder Nut auf dem Rand R der fertigbearbeiteten Linse L unter Berücksichtigung der Krümmungen K₁(ϕ), K₂(ϕ) der optisch wirksamen Flächen 14, 16 der Linse L berechnet werden, bevor die Linse L unter einer entsprechend dem berechneten Verlauf der Facette F bzw. Nut gesteuerten Ausbildung der Facette F bzw. Nut fertigbearbeitet wird. Hierbei wird ausgehend von dem ermittelten Verlauf der Unterkante 36 und der Oberkante 38 des Randes R der vorbearbeiteten Linse L unter Berücksichtigung des bekannten Übermaßes a und der berechneten Krümmungen K₁(ϕ), K₂(ϕ) der optisch wirksamen Flächen 14, 16 auf den Verlauf der Unterkante und der Oberkante des Randes der fertigbearbeiteten Linse zurückgeschlossen, der in Fig. 4 durch die berechneten Punkte B₁ und B₂ markiert ist. Zwischen der berechneten Unterkante und der berechneten Oberkante des Randes der fertigbearbeiteten Linse ist die Facette F bzw. Nut in an sich bekannter Weise zu plazieren.

Nach Schließen der Verschlußklappen für den Laser 28 und die Videokamera 30 erfolgt schließlich das Fertigbearbeiten des Randes R der Linse L in an sich bekannter und daher hier nicht näher beschriebener Weise unter Berücksichtigung der ermittelten Randdaten der vorbearbeiteten Linse L mittels des zweiten Randbearbeitungswerkzeugs, wobei die Linse L die in Fig. 2 gezeigte, zur Umfangskontur der Fassung im wesentlichen komplementäre Umfangskontur U₂ erhält. Hierbei kann, wie bereits erwähnt, auch eine Facette F oder Nut am Linsenrand R ausgebildet werden.

Obgleich vorstehend beschrieben wurde, daß die Werkstückantriebs- und Spannvorrichtung sowie die Meßanordnung Bestandteile einer Linsenrandbearbeitungsmaschine sind, ist es natürlich auch denkbar, daß diese Vorrichtungen Bestandteile einer separaten Meßmaschine sind, welche dazu dient, die Randdaten einer Linse L wie oben beschrieben zu ermitteln.

Es wird ein Verfahren zur Randbearbeitung einer optischen Linse, insbesondere eines Brillenglases offenbart, mit den Schritten: Vorbearbeiten des Randes der um eine Werkstückdrehachse winkelgesteuert drehbaren Linse mittels eines radial relativ zur Werkstückdrehachse zustellbaren ersten Randbearbeitungswerkzeugs, wobei die Linse eine bis auf ein geringfügiges Übermaß der Umfangskontur einer Linsenfassung entsprechende Umfangskontur erhält, berührungsloses Messen des vorbearbeiteten Linsenrandes und Fertigbearbeiten des Linsenrandes unter Berücksichtigung der ermittelten Randdaten der vorbearbeiteten Linse mittels eines relativ zur Werkstückdrehachse radial zustellbaren zweiten Randbearbeitungswerkzeugs, wobei die Linse eine zur Umfangskontur der Linsenfassung im wesentlichen komplementäre Umfangskontur erhält. Erfindungsgemäß wird beim Vorbearbeiten des Linsenrandes eine im trockenen Zustand definiert matte Randoberfläche mit einer gemittelten Rauhtiefe Rz von 4,5 bis 11 µm erzeugt und sodann die trockene bzw. auf besondere weise getrocknete Oberfläche mittels einer einen Laser und eine Videokamera umfassenden, auf besondere Weise berührungslos arbeitenden Meßanordnung gemessen, um die Randdaten der vorbearbeiteten Linse mit erhöhter Genauigkeit und deutlich schneller als bisher möglich zu ermitteln.

### Bezugszeichenliste

- 10: Haltewelle
- 12: Haltewelle
- 14: untere optisch wirksame Fläche der Linse
- 16: obere optisch wirksame Fläche der Linse
- 18: Blockstück
- 20: Niederhalter
- 22: Winkelmeßwertgeber
- 24: Steuereinheit
- 26: Meßanordnung
- 28: Laser
- 30: Videokamera
- 32: Signalaufbereitungseinrichtung
- 34: Auftreffstelle
- 36: Unterkante des Linsenrandes
- 38: Oberkante des Linsenrandes
- 40: Oberkante des Niederhalters
- 42: Abbildungsebene

- a: Übermaß
- r: Radiuswerte
- w: Winkel zwischen der Laserstrahlebene und der optischen Achse der Videokamera
- z: Höhenwerte

- A: Strichbild
- B: berechnete Punkte
- C: Werkstückdrehachse
- F: Facette
- L: optische Linse
- P: Meßpunkte
- R: Rand der Linse
- S: Laserstrahlen
- U₁: Umfangskontur der vorbearbeiteten Linse
- U₂: Umfangskontur der fertigbearbeiteten Linse

## Patentansprüche

1. Verfahren zur Randbearbeitung einer optischen Linse (L), insbesondere eines Brillenglases, die um eine Werkstückdrehachse (C) winkelgesteuert drehbar ist, mit den Schritten:
Vorbearbeiten des Randes (R) der Linse (L) mittels eines relativ zur Werkstückdrehachse (C) wenigstens radial zustellbaren ersten Randbearbeitungswerkzeugs, wobei die Linse (L) eine Umfangskontur (U₁) erhält, die bis auf ein geringfügiges Übermaß (a) der Umfangskontur einer Fassung für die Linse (L) entspricht,
berührungsloses Messen des Randes (R) der vorbearbeiteten Linse (L) und
Fertigbearbeiten des Randes (R) der Linse (L) unter Berücksichtigung der ermittelten Randdaten der vorbearbeiteten Linse (L) mittels eines relativ zur Werkstückdrehachse (C) wenigstens radial zustellbaren zweiten Randbearbeitungswerkzeugs, wobei die Linse (L) eine zur Umfangskontur der Fassung im wesentlichen komplementären Umfangskontur (U₂) erhält,
**dadurch gekennzeichnet, daß** beim Vorbearbeiten des Randes (R) der Linse (L) am Rand (R) eine im trockenen Zustand definiert matte Oberfläche mit einer gemittelten Rauhtiefe Rz von 4,5 bis 11 µm erzeugt wird,
daß, wenn das Vorbearbeiten des Randes (R) der Linse (L) unter Zufuhr von Kühlflüssigkeit erfolgt, wenigstens der Rand (R) der vorbearbeiteten Linse (L) getrocknet wird bevor der Rand (R) gemessen wird, wobei zum Trocknen des Randes (R) der vorbearbeiteten Linse (L) die Zufuhr von Kühlflüssigkeit abgestellt und sodann das Randbearbeitungswerkzeug so in radialer Richtung relativ zur Werkstückdrehachse (C) zugestellt wird, daß es mit einer sehr geringen, im wesentlichen konstanten Eindringtiefe mit dem Rand (R) der Linse (L) in Bearbeitungseingriff tritt, während die Linse (L) gedreht wird, und
daß zum Messen des Randes (R) ein Bündel von Laserstrahlen (S) mittels eines in einer vorgegebenen Lagebeziehung zur Werkstückdrehachse (R) stehenden Lasers (28) auf die trockene, definiert matte Oberfläche des Randes (R) gerichtet und ein Bild der Auftreffstelle (34) der Laserstrahlen (S) mittels einer in einer vorgegebenen Lagebeziehung zur Werkstückdrehachse (C) stehenden Videokamera (30) aufgenommen wird, wobei das aufgenommene Bild sodann hinsichtlich des Abstands (r) der Auftreffstelle (34) von der Werkstückdrehachse (C) und ggf. von Höhenwerten (z) der Auftreffstelle (34) ausgewertet wird, um die Randdaten der vorbearbeiteten Linse (L) zu ermitteln.

2. Verfahren zur Randbearbeitung einer optischen Linse (L), insbesondere eines Brillenglases, die um eine Werkstückdrehachse (C) winkelgesteuert drehbar ist, mit den Schritten:
Vorbearbeiten des Randes (R) der Linse (L) mittels eines relativ zur Werkstückdrehachse (C) wenigstens radial zustellbaren ersten Randbearbeitungswerkzeugs, wobei die Linse (L) eine Umfangskontur (U₁) erhält, die bis auf ein geringfügiges Übermaß (a) der Umfangskontur einer Fassung für die Linse (L) entspricht,
berührungsloses Messen des Randes (R) der vorbearbeiteten Linse (L) und
Fertigbearbeiten des Randes (R) der Linse (L) unter Berücksichtigung der ermittelten Randdaten der vorbearbeiteten Linse (L) mittels eines relativ zur Werkstückdrehachse (C) wenigstens radial zustellbaren zweiten Randbearbeitungswerkzeugs, wobei die Linse (L) eine zur Umfangskontur der Fassung im wesentlichen komplementären Umfangskontur (U₂) erhält,
**dadurch gekennzeichnet, daß** beim Vorbearbeiten des Randes (R) der Linse (L) am Rand (R) eine im trockenen Zustand definiert matte Oberfläche mit einer gemittelten Rauhtiefe Rz von 4,5 bis 11 µm erzeugt wird,
daß, wenn das Vorbearbeiten des Randes (R) der Linse (L) unter Zufuhr von Kühlflüssigkeit erfolgt, wenigstens der Rand (R) der vorbearbeiteten Linse (L) getrocknet wird bevor der Rand (R) gemessen wird, wobei zum Trocknen des Randes (R) der vorbearbeiteten Linse (L) die Zufuhr von Kühlflüssigkeit abgestellt und sodann das mit einer hohen Drehzahl angetriebene Randbearbeitungswerkzeug so in radialer Richtung relativ zur Werkstückdrehachse (C) zugestellt wird, daß zwischen dem Randbearbeitungswerkzeug und dem Rand der Linse (L) ein Spalt mit einer kleinen Spaltbreite verbleibt, während die Linse (L) gedreht wird, und
daß zum Messen des Randes (R) ein Bündel von Laserstrahlen (S) mittels eines in einer vorgegebenen Lagebeziehung zur Werkstückdrehachse (R) stehenden Lasers (28) auf die trockene, definiert matte Oberfläche des Randes (R) gerichtet und ein Bild der Auftreffstelle (34) der Laserstrahlen (S) mittels einer in einer vorgegebenen Lagebeziehung zur Werkstückdrehachse (C) stehenden Videokamera (30) aufgenommen wird, wobei das aufgenommene Bild sodann hinsichtlich des Abstands (r) der Auftreffstelle (34) von der Werkstückdrehachse (C) und ggf. von Höhenwerten (z) der Auftreffstelle (34) ausgewertet wird, um die Randdaten der vorbearbeiteten Linse (L) zu ermitteln.

3. Verfahren nach Anspruch 1 oder 2, **dadurch gekennzeichnet, daß** zum Trocknen des Randes (R) der vorbearbeiteten Linse (L) der Rand (R) der Linse (L) auch mittels mindestens einer Düse mit Luft angeblasen wird, während die Linse (L) gedreht wird.

4. Verfahren zur Randbearbeitung einer optischen Linse (L), insbesondere eines Brillenglases, die um eine Werkstückdrehachse (C) winkelgesteuert drehbar ist, mit den Schritten:
Vorbearbeiten des Randes (R) der Linse (L) mittels eines relativ zur Werkstückdrehachse (C) wenigstens radial zustellbaren ersten Randbearbeitungswerkzeugs, wobei die Linse (L) eine Umfangskontur (U₁) erhält, die bis auf ein geringfügiges Übermaß (a) der Umfangskontur einer Fassung für die Linse (L) entspricht,
berührungsloses Messen des Randes (R) der vorbearbeiteten Linse (L) und
Fertigbearbeiten des Randes (R) der Linse (L) unter Berücksichtigung der ermittelten Randdaten der vorbearbeiteten Linse (L) mittels eines relativ zur Werkstückdrehachse (C) wenigstens radial zustellbaren zweiten Randbearbeitungswerkzeugs, wobei die Linse (L) eine zur Umfangskontur der Fassung im wesentlichen komplementären Umfangskontur (U₂) erhält,
**dadurch gekennzeichnet, daß** beim Vorbearbeiten des Randes (R) der Linse (L) am Rand (R) eine im trockenen Zustand definiert matte Oberfläche mit einer gemittelten Rauhtiefe Rz von 4,5 bis 11 µm erzeugt wird,
daß, wenn das Vorbearbeiten des Randes (R) der Linse (L) unter Zufuhr von Kühlflüssigkeit erfolgt, wenigstens der Rand (R) der vorbearbeiteten Linse (L) getrocknet wird bevor der Rand (R) gemessen wird, wobei zum Trocknen des Randes, (R) der vorbearbeiteten Linse (L) die Zufuhr von Kühlflüssigkeit abgestellt und sodann der Rand (R) der Linse (L) mittels mindestens einer Düse mit Luft angeblasen wird, während die Linse (L) gedreht wird,
daß zum Messen des Randes (R) ein Bündel von Laserstrahlen (S) mittels eines in einer vorgegebenen Lagebeziehung zur Werkstückdrehachse (R) stehenden Lasers (28) auf die trockene, definiert matte Oberfläche des Randes (R) gerichtet und ein Bild der Auftreffstelle (34) der Laserstrahlen (S) mittels einer in einer vorgegebenen Lagebeziehung zur Werkstückdrehachse (C) stehenden Videokamera (30) aufgenommen wird, wobei das aufgenommene Bild sodann hinsichtlich des Abstands (r) der Auftreffstelle (34) von der Werkstückdrehachse (C) und ggf. von Höhenwerten (z) der Auftreffstelle (34) ausgewertet wird, um die Randdaten der vorbearbeiteten Linse (L) zu ermitteln.

5. Verfahren nach einem der vorhergehenden Ansprüche, **dadurch gekennzeichnet, daß** das Vorbearbeiten des Randes (R) der Linse (L) mittels eines Fräsers oder einer Schleifscheibe erfolgt.

6. Verfahren nach einem der vorhergehenden Ansprüche, **dadurch gekennzeichnet, daß** zum Messen des Randes (R) der vorbearbeiteten Linse (L) die Linse (L) winkelschrittweise von einer Meßposition zur nächsten Meßposition gedreht wird, bis die Linse (L) eine vollständige Umdrehung ausgeführt hat.

7. Verfahren nach Anspruch 6, **dadurch gekennzeichnet, daß** die Linse (L) mit gleichen Winkelschritten von Meßposition zu Meßposition gedreht wird.

8. Verfahren nach Anspruch 6 oder 7, **dadurch gekennzeichnet, daß** die Anzahl der Winkelschritte gerade ist.

9. Verfahren nach einem der Ansprüche 6 bis 8, **dadurch gekennzeichnet, daß** in jeder Meßposition der zwischen einem Blockstück (18) und einem Niederhalter (20) eingespannten Linse (L) der Drehwinkel (ϕ) der Linse (L), die Höhe (z₁(ϕ), z₂(ϕ)) einer Unterkante (36) und einer Oberkante (38) des Randes (R) der Linse (L) bezogen auf eine Anlagestelle der Linse (L) am Blockstück (18), der Abstand (r₁(ϕ)) des Randes (R) der Linse (L) von der Werkstückdrehachse (C), die Höhe (z₃(ϕ)) einer Oberkante (40) des Niederhalters (20) bezogen auf die Anlagestelle der Linse (L) am Blockstück (18) sowie der Abstand (r₂(ϕ)) der Oberkante (40) des Niederhalters (20) von der Werkstückdrehachse (C) ermittelt werden.

10. Verfahren nach Anspruch 9, **dadurch gekennzeichnet, daß** mittels der für einen durch die Werkstückdrehachse (C) verlaufenden Linsenquerschnitt ermittelten Höhen- und Abstandswerte (z₁(ϕ), z₂(ϕ), z₃(ϕ), r₁(ϕ), r₂(ϕ)) die Krümmungen (K₁(ϕ), K₂(ϕ)) beider optisch wirksamen Flächen (14, 16) der Linse (L) berechnet werden.

11. Verfahren nach Anspruch 10, **dadurch gekennzeichnet, daß** der Verlauf einer Facette (F) oder Nut auf dem Rand (R) der fertigbearbeiteten Linse (L) unter Berücksichtigung der Krümmungen (K₁ (ϕ), K₂ (ϕ)) der optisch wirksamen Flächen (14, 16) der Linse (L) berechnet wird, bevor die Linse (L) unter einer entsprechend dem berechneten Verlauf der Facette (F) bzw. Nut gesteuerten Ausbildung der Facette (F) bzw. Nut fertigbearbeitet wird.

## Claims

1. A process for edge-machining an optical lens (L), in particular a spectacle lens, which is rotatable in an angularly controlled manner about a rotational axis (C) of the workpiece, comprising the stages:
preliminary machining of the edge (R) of the lens (L) by means of a first edge-machining tool adjustable at least radially relative to the rotational axis (C) of the workpiece, wherein the lens (L) is provided with a circumferential contour (U₁) which corresponds to the circumferential contour of a holder for the lens (L) apart from a slight degree of oversizing (a),
contactless measurement of the edge (R) of the preliminarily machined lens (L) and
finish-machining of the edge (R) of the lens (L), taking account of the detected edge data of the preliminarily machined lens (L), by means of a second edge-machining tool adjustable at least radially relative to the rotational axis (C) of the workpiece, wherein the lens (L) is provided with a circumferential contour (U₂) substantially complementary to the circumferential contour of the holder,
**characterized in that**, during preliminary machining of the edge (R) of the lens (L), a surface which is definedly matt in the dry state is produced at the edge (R) with an average surface roughness Rz of 4,5 to 11 µm,
that, if preliminary machining of the edge (R) of the lens (L) is performed with cooling liquid supply, at least the edge (R) of the preliminarily machined lens (L) is dried before the edge (R) is measured, wherein, for drying the edge (R) of the preliminarily machined lens (L), the supply of cooling liquid is turned off and then the edge-machining tool is adjusted radially relative to the rotational axis (C) of the workpiece in such a way that it enters into machining engagement with the edge (R) of the lens (L) with a very slight, substantially constant penetration depth, while the lens (L) is rotated, and
that, for measuring the edge (R), a bundle of laser beams (S) is directed towards the dry, definedly matt surface of the edge (R) by means of a laser (28) arranged in a predetermined positional relationship to the rotational axis (C) of the workpiece, and an image of the point of impact (34) of the laser beams (S) is recorded by means of a video camera (30) arranged in a predetermined positional relationship to the rotational axis (C) of the workpiece, wherein the recorded image is then evaluated with respect to the distance (r) of the point of impact (34) from the rotational axis (C) of the workpiece and optionally with regard to height values (z) of the point of impact (34), in order to determine the edge data of the preliminarily machined lens (L).

2. A process for edge-machining an optical lens (L), in particular a spectacle lens, which is rotatable in an angularly controlled manner about a rotational axis (C) of the workpiece, comprising the stages:
preliminary machining of the edge (R) of the lens (L) by means of a first edge-machining tool adjustable at least radially relative to the rotational axis (C) of the workpiece, wherein the lens (L) is provided with a circumferential contour (U₁) which corresponds to the circumferential contour of a holder for the lens (L) apart from a slight degree of oversizing (a),
contactless measurement of the edge (R) of the preliminarily machined lens (L) and
finish-machining of the edge (R) of the lens (L), taking account of the detected edge data of the preliminarily machined lens (L), by means of a second edge-machining tool adjustable at least radially relative to the rotational axis (C) of the workpiece, wherein the lens (L) is provided with a circumferential contour (U₂) substantially complementary to the circumferential contour of the holder,
**characterized in that**, during preliminary machining of the edge (R) of the lens (L), a surface which is definedly matt in the dry state is produced at the edge (R) with an average surface roughness Rz of 4,5 to 11 µm,
that, if preliminary machining of the edge (R) of the lens (L) is performed with cooling liquid supply, at least the edge (R) of the preliminarily machined lens (L) is dried before the edge (R) is measured, wherein, for drying the edge (R) of the preliminarily machined lens (L), the supply of cooling liquid is turned off and then the edge-machining tool driven at high speed is adjusted radially relative to the rotational axis (C) of the workpiece in such a way that a gap with a small gap width remains between the edge-machining tool and the edge of the lens (L), while the lens (L) is rotated, and
that, for measuring the edge (R), a bundle of laser beams (S) is directed towards the dry, definedly matt surface of the edge (R) by means of a laser (28) arranged in a predetermined positional relationship to the rotational axis (C) of the workpiece, and an image of the point of impact (34) of the laser beams (S) is recorded by means of a video camera (30) arranged in a predetermined positional relationship to the rotational axis (C) of the workpiece, wherein the recorded image is then evaluated with respect to the distance (r) of the point of impact (34) from the rotational axis (C) of the workpiece and optionally with regard to height values (z) of the point of impact (34), in order to determine the edge data of the preliminarily machined lens (L).

3. A process according to claim 1 or 2, **characterized in that**, for drying the edge (R) of the preliminarily machined lens (L) also air is blown at the edge (R) of the lens (L) by means of at least one nozzle, while the lens (L) is rotated.

4. A process for edge-machining an optical lens (L), in particular a spectacle lens, which is rotatable in an angularly controlled manner about a rotational axis (C) of the workpiece, comprising the stages:
preliminary machining of the edge (R) of the lens (L) by means of a first edge-machining tool adjustable at least radially relative to the rotational axis (C) of the workpiece, wherein the lens (L) is provided with a circumferential contour (U₁) which corresponds to the circumferential contour of a holder for the lens (L) apart from a slight degree of oversizing (a),
contactless measurement of the edge (R) of the preliminarily machined lens (L) and
finish-machining of the edge (R) of the lens (L), taking account of the detected edge data of the preliminarily machined lens (L), by means of a second edge-machining tool adjustable at least radially relative to the rotational axis (C) of the workpiece, wherein the lens (L) is provided with a circumferential contour (U₂) substantially complementary to the circumferential contour of the holder,
**characterized in that**, during preliminary machining of the edge (R) of the lens (L), a surface which is definedly matt in the dry state is produced at the edge (R) with an average surface roughness Rz of 4,5 to 11 µm,
that, if preliminary machining of the edge (R) of the lens (L) is performed with cooling liquid supply, at least the edge (R) of the preliminarily machined lens (L) is dried before the edge (R) is measured, wherein for drying the edge (R) of the preliminarily machined lens (L), the supply of cooling liquid is turned off and then air is blown at the edge (R) of the lens (L) by means of at least one nozzle, while the lens (L) is rotated,
that, for measuring the edge (R), a bundle of laser beams (S) is directed towards the dry, definedly matt surface of the edge (R) by means of a laser (28) arranged in a predetermined positional relationship to the rotational axis (C) of the workpiece, and an image of the point of impact (34) of the laser beams (S) is recorded by means of a video camera (30) arranged in a predetermined positional relationship to the rotational axis (C) of the workpiece, wherein the recorded image is then evaluated with respect to the distance (r) of the point of impact (34) from the rotational axis (C) of the workpiece and optionally with regard to height values (z) of the point of impact (34), in order to determine the edge data of the preliminarily machined lens (L).

5. A process according to one of the preceding claims, **characterized in that** preliminary machining of the edge (R) of the lens (L) is carried out by a milling head or a grinding wheel.

6. A process according to one of the preceding claims, **characterized in that**, for measuring the edge (R) of the preliminarily machined lens (L), the lens (L) is rotated by angular steps from one measuring position to the next measuring position until the lens (L) has performed a complete revolution.

7. A process according to claim 6, **characterized in that** the lens (L) is rotated by uniform angular steps from measuring position to measuring position.

8. A process according to claim 6 or 7, **characterized in that** the number of angular steps is even.

9. A process according to one of the claims 6 to 8, **characterized in that**, in each measuring position of the lens (L) clamped between a block piece (18) and a holding-down device (20), the angle of rotation (ϕ) of the lens (L), the heights (z₁(ϕ), z₂(ϕ)) of a lower rim (36) and an upper rim (38) of the edge (R) of the lens (L) relative to a bearing point of the lens (L) against the block piece (18), the distance (r₁(ϕ)) of the edge (R) of the lens (L) from the rotational axis (C) of the workpiece, the height (z₃(ϕ)) of an upper rim (40) of the holding-down device (20) relative to the bearing point of the lens (L) against the block piece (18) as well as the distance (r₂(ϕ)) of the upper rim (40) of the holding-down device (20) from the rotational axis (C) of the workpiece are detected.

10. A process according to claim 9, **characterized in that** the curvatures (K₁(ϕ), K₂(ϕ)) of the two optically effective surfaces (14, 16) of the lens (L) are calculated by means of the height and distance values (z₁(ϕ), z₂(ϕ), z₃(ϕ), r₁(ϕ), r₂(ϕ)) obtained for a lens cross section extending through the rotational axis (C) of the workpiece.

11. A process according to claim 10, **characterized in that** the profile of a bevel (F) or groove on the edge (R) of the finished lens (L) is calculated, taking into account the curvatures (K₁(ϕ), K₂(ϕ)) of the optically effective surfaces (14, 16) of the lens (L), before the lens (L) is finish-machined with formation of the bevel (F) or groove in accordance with the calculated profile for the bevel (F) or groove.

## Revendications

1. Procédé d'usinage du bord d'une lentille optique (L), en particulier d'un verre de lunettes, qui peut être entraînée en rotation de manière commandée pas à pas autour d'un axe de rotation (C) de la pièce, comportant les étapes :
- pré-usinage du bord (R) de la lentille (L) au moyen d'un premier outil d'usinage du bord, dont l'approche peut être définie au moins radialement par rapport à l'axe de rotation (C) de la pièce, la lentille (L) obtenant un contour périphérique (U₁) qui, à l'exception d'une légère surdimension (a), correspond au contour périphérique d'une monture pour la lentille (L),
- mesure sans contact du bord (R) de la lentille (L) pré-usinée, et
- usinage de finition du bord (R) de la lentille (L), en tenant compte des données déterminées du bord de la lentille (L) pré-usinée, au moyen d'un deuxième outil d'usinage du bord dont l'approche peut être définie au moins radialement par rapport à l'axe de rotation (C) de la pièce, la lentille (L) obtenant un contour périphérique (U₂) sensiblement complémentaire au contour périphérique de la monture,
**caractérisé**
- **en ce que**, pendant le pré-usinage du bord (R) de la lentille (L), une surface matte, définie à l'état sec, avec une profondeur de rugosité Rz de 4,5 à 11 µm, est réalisée sur le bord (R),
- **en ce que**, lorsque le pré-usinage du bord (R) de la lentille (L) est effectué moyennant l'admission d'un liquide de refroidissement, au moins le bord (R) de la lentille (L) pré-usinée est séché avant que le bord (R) soit mesuré, l'admission du liquide de refroidissement étant interrompue pour le séchage du bord (R) de la lentille (L) pré-usinée et l'approche de l'outil d'usinage du bord étant définie ensuite dans la direction radiale par rapport à l'axe de rotation (C) de la pièce, de telle sorte que ledit outil est amené en prise d'usinage avec le bord (R) de la lentille (L) avec une très faible profondeur de pénétration sensiblement constante, alors que la lentille (L) est entraînée en rotation, et
- **en ce que**, pour mesurer le bord (R), un faisceau de rayons laser (S) est dirigé sur la surface matte sèche définie du bord (R) au moyen d'un laser (28) situé dans une position relative prédéfinie par rapport à l'axe de rotation (C) de la pièce, et une image du lieu d'impact (34) des rayons laser (S) est enregistrée au moyen d'une caméra vidéo (30) située dans une position relative prédéfinie par rapport à l'axe de rotation (C) de la pièce, la distance (r) entre le lieu d'impact (34) et l'axe de rotation (C) de la pièce et, le cas échéant, les valeurs de hauteur (z) du lieu d'impact (34) étant ensuite analysées sur l'image enregistrée afin de déterminer les données du bord de la lentille (L) pré-usinée.

2. Procédé d'usinage du bord d'une lentille optique (L), en particulier d'un verre de lunettes, qui peut être entraînée en rotation de manière commandée pas à pas autour d'un axe de rotation (C) de la pièce, comportant les étapes :
- pré-usinage du bord (R) de la lentille (L) au moyen d'un premier outil d'usinage du bord, dont l'approche peut être définie au moins radialement par rapport à l'axe de rotation (C) de la pièce, la lentille (L) obtenant un contour périphérique (U₁) qui, à l'exception d'une légère surdimension (a), correspond au contour périphérique d'une monture pour la lentille (L),
- mesure sans contact du bord (R) de la lentille (L) pré-usinée, et
- usinage de finition du bord (R) de la lentille (L), en tenant compte des données déterminées du bord de la lentille (L) pré-usinée, au moyen d'un deuxième outil d'usinage du bord dont l'approche peut être définie au moins radialement par rapport à l'axe de rotation (C) de la pièce, la lentille (L) obtenant un contour périphérique (U₂) sensiblement complémentaire au contour périphérique de la monture,
**caractérisé**
- **en ce que**, pendant le pré-usinage du bord (R) de la lentille (L), une surface matte, définie à l'état sec, avec une profondeur de rugosité Rz de 4,5 à 11 µm, est réalisée sur le bord (R),
- **en ce que**, lorsque le pré-usinage du bord (R) de la lentille (L) est effectué moyennant l'admission d'un liquide de refroidissement, au moins le bord (R) de la lentille (L) pré-usinée est séché avant que le bord (R) soit mesuré, l'admission du liquide de refroidissement étant interrompue pour le séchage du bord (R) de la lentille (L) pré-usinée et l'approche de l'outil d'usinage du bord étant définie ensuite dans la direction radiale par rapport à l'axe de rotation (C) de la pièce, de telle sorte qu'il reste une fente de faible largeur entre ledit outil d'usinage du bord et le bord (R) de la lentille (L), alors que la lentille (L) est entraînée en rotation, et
- **en ce que**, pour mesurer le bord (R), un faisceau de rayons laser (S) est dirigé sur la surface matte sèche définie du bord (R) au moyen d'un laser (28) situé dans une position relative prédéfinie par rapport à l'axe de rotation (C) de la pièce, et une image du lieu d'impact (34) des rayons laser (S) est enregistrée au moyen d'une caméra vidéo (30) située dans une position relative prédéfinie par rapport à l'axe de rotation (C) de la pièce, la distance (r) entre le lieu d'impact (34) et l'axe de rotation (C) de la pièce et, le cas échéant, les valeurs de hauteur (z) du lieu d'impact (34) étant ensuite analysées sur l'image enregistrée afin de déterminer les données du bord de la lentille (L) pré-usinée.

3. Procédé selon la revendication 1 ou 2, **caractérisé en ce que**, pour le séchage du bord (R) de la lentille (L) pré-usinée, au moins une buse souffle de l'air sur le bord (R) de la lentille (L), alors que la lentille (L) est entraînée en rotation.

4. Procédé d'usinage du bord d'une lentille optique (L), en particulier d'un verre de lunettes, qui peut être entraînée en rotation de manière commandée pas à pas autour d'un axe de rotation (C) de la pièce, comportant les étapes :
- pré-usinage du bord (R) de la lentille (L) au moyen d'un premier outil d'usinage du bord, dont l'approche peut être définie au moins radialement par rapport à l'axe de rotation (C) de la pièce, la lentille (L) obtenant un contour périphérique (U₁) qui, à l'exception d'une légère surdimension (a), correspond au contour périphérique d'une monture pour la lentille (L),
- mesure sans contact du bord (R) de la lentille (L) pré-usinée, et
- usinage de finition du bord (R) de la lentille (L), en tenant compte des données déterminées du bord de la lentille (L) pré-usinée, au moyen d'un deuxième outil d'usinage du bord dont l'approche peut être définie au moins radialement par rapport à l'axe de rotation (C) de la pièce, la lentille (L) obtenant un contour périphérique (U₂) sensiblement complémentaire au contour périphérique de la monture,
**caractérisé**
- **en ce que**, pendant le pré-usinage du bord (R) de la lentille (L), une surface matte, définie à l'état sec, avec une profondeur de rugosité Rz de 4,5 à 11 µm, est réalisée sur le bord (R),
- **en ce que**, lorsque le pré-usinage du bord (R) de la lentille (L) est effectué moyennant l'admission d'un liquide de refroidissement, au moins le bord (R) de la lentille (L) pré-usinée est séché avant que le bord (R) soit mesuré, l'admission du liquide de refroidissement étant interrompue pour le séchage du bord (R) de la lentille (L) pré-usinée et de l'air étant soufflé ensuite au moyen d'au moins une buse sur le bord (R) de la lentille (L), alors que la lentille (L) est entraînée en rotation,
- **en ce que**, pour mesurer le bord (R), un faisceau de rayons laser (S) est dirigé sur la surface matte sèche définie du bord (R) au moyen d'un laser (28) situé dans une position relative prédéfinie par rapport à l'axe de rotation (C) de la pièce, et une image du lieu d'impact (34) des rayons laser (S) est enregistrée au moyen d'une caméra vidéo (30) située dans une position relative prédéfinie par rapport à l'axe de rotation (C) de la pièce, la distance (r) entre le lieu d'impact (34) et l'axe de rotation (C) de la pièce et, le cas échéant, les valeurs de hauteur (z) du lieu d'impact (34) étant ensuite analysées sur l'image enregistrée afin de déterminer les données du bord de la lentille (L) pré-usinée.

5. Procédé selon l'une quelconque des revendications précédentes, **caractérisé en ce que** le pré-usinage du bord (R) de la lentille (L) est effectué au moyen d'une fraise ou d'une meule.

6. Procédé selon l'une quelconque des revendications précédentes, **caractérisé en ce que**, pour mesurer le bord (R) de la lentille (L) pré-usinée, la lentille (L) est entraînée par pas angulaires à partir d'une position de mesure vers une position de mesure suivante jusqu'à ce que la lentille (L) ait effectué un tour complet.

7. Procédé selon la revendication 6, **caractérisé en ce que** la lentille (L) est entraînée en rotation avec les mêmes pas angulaires d'une position de mesure à l'autre.

8. Procédé selon la revendication 6 ou 7, **caractérisé en ce que** le nombre de pas angulaires est un nombre pair.

9. Procédé selon l'une quelconque des revendications 6 à 8, **caractérisé en ce que**, dans chaque position de mesure de la lentille (L) serrée entre un bloc (18) et un élément de retenue (20), on détermine l'angle de rotation (ϕ) de la lentille (L), la hauteur (z₁(ϕ), z₂(ϕ)) d'une arête inférieure (36) et d'une arête supérieure (38) du bord (R) de la lentille (L) par rapport à un lieu de contact de la lentille (L) sur le bloc (18), la distance (r₁(ϕ)) entre le bord (R) de la lentille (L) et l'axe de rotation de la pièce (C), la hauteur (z₃(ϕ)) d'une arête supérieure (40) de l'élément de retenue (20) par rapport au lieu de contact de la lentille (L) sur le bloc (18), ainsi que la distance (r₂(ϕ)) entre l'arête supérieure (40) de l'élément de retenue (20) et l'axe de rotation de la pièce (C).

10. Procédé selon la revendication 9, **caractérisé en ce que** les valeurs de hauteur et de distance (z₁(ϕ), z₂(ϕ), z₃(ϕ), r₁(ϕ), r₂(ϕ)), déterminées pour la section de la lentille passant par l'axe de rotation de la pièce (C), sont utilisées pour calculer les courbures (K₁(ϕ), K₂(ϕ)) des deux faces (14, 16), optiquement actives, de la lentille (L).

11. Procédé selon la revendication 10, **caractérisé en ce que** le contour d'une facette (F) ou rainure sur le bord (R) de la lentille (L) finie est calculé en tenant compte des courbures (K₁(ϕ), K₂(ϕ)) des faces (14, 16), optiquement actives, de la lentille (L), avant que la lentille (L) soit soumise à un usinage de finition moyennant la configuration commandée de la facette (F) ou rainure, correspondant au contour calculé de la facette (F) ou rainure.
